# EUROPEAN PATENT APPLICATION

(11) **EP 1 892 973 A1**
(43) Date of publication of application: **27.02.2008**
(21) Application number: 06732375.8
(22) Date of filing: 26.04.2006
(51) Int. Cl.: H04Q 7/36, H04B 7/15, H04B 7/26, H04L 12/28

(54) **WIRELESS BASE STATION DEVICE**

(30) Priority: 14.06.2005 JP 2005174179
(71) Applicant: MATSUSHITA ELECTRIC INDUSTRIAL CO., LTD., Osaka 571-8501 (JP)
(72) Inventor: IDA, Shuji Matsushita Electric Industrial Co., Ltd., 2-1-61, Shiromi, Chuo-ku, Osaka 540-6207 (JP)
(74) Representative: Zimmer, Franz-Josef
(86) International application number: PCT/JP2006/308769
(87) International publication number: WO 2006/134728

(57) **Abstract**

A radio base station apparatus that can be installed simply is provided. A radio communication system includes a base station control apparatus (200) connected to an upper communication network (300) by using a communication line (L1) such as an optical fiber cable, or the like, a base station control apparatus (100R) connected to the base station control apparatus (200) via a communication line (L2) such as LAN, or the like, and a base station control apparatus (100L) connected automatically to the base station control apparatus (100R) via radio communication. The base station control apparatus (100L) searches automatically the base station control apparatus (100R) to establish a connection, and then acquires configuration information from the base station control apparatus (200) via the base station control apparatus (100R).

## Description

### Technical Field

The present invention relates to a radio base station apparatus that is connectable to an upper communication network via a base station control apparatus.

### Background Art

The communication system for holding communication by connecting an access point such as a wireless LAN, or the like to an upper communication network is spreading rapidly. In such communication system, as the system for connecting the radio base station apparatus such as the access point, or the like and the upper communication network, the system in which a plurality of radio base station apparatuses are connected to the upper communication network via a control equipment such as a mobile access controller (MoAC), or the like and then a plurality of radio base station apparatuses are controlled in cooperation mutually by the control equipment is devised, in addition to the system in which the radio base station apparatus is connected directly to the upper communication network (see Non-Patent Literature 1, for example).

Non-Patent Literature 1: P.Calhoun and five others, "Light Weight Access Point Protocol (LWAPP)", [online], 2003, IETF (Internet Engineering Task Force) Internet draft, [2005 May 18 searched], Internet <URL:http://web.archive.org/web/ 20031209115721/http://www.ietf.org/internet-drafts/draft-calhoun-seamoby-lwap p-03.txt>

### Disclosure of the Invention

### Problems that the Invention is to Solve

However, in the system in which the radio base station apparatus is controlled by using the above control equipment, the radio base station control apparatus and the radio base station must be connected by the connecting cable. Therefore, such a circumstance existed that the radio base station apparatus cannot be installed in a radio wave dead zone such as a conference room that is surrounded by walls, or the like, a location such as a separate building in which the cable cannot be physically laid, or the like, and others, for example.

The present invention has been made in view of the above circumstances in the prior art, and it is an object of the present invention to provide a radio base station apparatus that can be simply installed.

### Means for Solving the Problems

A radio base station apparatus of the present invention for a radio communication system including a base station control apparatus and the radio base station apparatus which holds communication with a radio terminal device via radio communication and is connectable to an upper communication network via the base station control apparatus, includes an inter-base station connecting radio portion for holding communication with a first radio base station apparatus which is connected to the base station control apparatus; a terminal connecting radio portion for holding radio communication with the radio terminal device; and a communication controlling portion for holding communication from the terminal connecting radio portion to the radio terminal device and controlling the inter-base station connecting radio portion; wherein the communication controlling portion searches the first radio base station apparatus, executes a connecting process to the first radio base station apparatus, acquires configuration information from the base station control apparatus via the first radio base station apparatus, and holds communication with the base station control apparatus via the first radio base station apparatus by using the inter-base station connecting radio portion.

According to this configuration, it is possible to establish more radio base station apparatuses that do not need the cable connection to the base station control apparatus, and the radio base station apparatus can be installed simply because the automatic connection and configuration can be made after the installation.

Also, the radio base station apparatus of the present invention further includes a cable connecting portion for connecting a cable communication line which holds communication with a second radio base station apparatus serving as a lower radio base station apparatus; wherein the communication controlling portion controls the cable connecting portion and the inter-base station connecting radio portion to interconnect the communication between the first radio base station apparatus and the second radio base station apparatus.

According to this configuration, it is possible to establish more lower radio base station apparatuses via the cable communication line. Therefore, the radio base station apparatus can be installed more simply.

Also, in the radio base station apparatus of the present invention, the inter-base station connecting radio portion holds communication with a third radio base station apparatus serving as a lower radio base station apparatus, and the communication controlling portion controls the inter-base station connecting radio portion to interconnect the communication between the first radio base station apparatus and the second radio base station apparatus.

According to this configuration, it is possible to establish more lower radio base station apparatuses via the cable communication line. Therefore, the radio base station apparatus can be installed more simply.

A radio base station system of the present invention which holds communication with a terminal device via radio communication and is connectable to an upper communication network, includes the radio base station apparatus; a first base station controlling device for connecting the radio base station apparatus and the communication network by using a first communication path; and a second base station controlling device for connecting the radio base station apparatus and the communication network by using a second communication path different from the first communication path; wherein a redundancy is applied to the first base station controlling device and the second base station controlling device by using a VRRP protocol.

According to this configuration, a redundancy of the base station control apparatus is applied. Therefore, the radio base station system with high certainty of communication can be provided.

### Advantage of the Invention

According to the present invention, the radio base station apparatus that can be simply installed can be provided.

### Brief Description of the Drawings

[FIG.1] An explanatory view showing an outline of a radio communication system according to a first embodiment of the present invention.
[FIG.2] A block diagram showing a schematic configuration of a base station control apparatus according to the first embodiment of the present invention.
[FIG.3] A block diagram showing a schematic configuration of a radio base station apparatus according to the first embodiment of the present invention.
[FIG.4] A flowchart showing procedures of a communication connection method of the radio communication system according to the first embodiment of the present invention.
[FIG.5] A sequence diagram showing data exchange between the radio base station apparatus and the base station control apparatus according to the first embodiment of the present invention.
[FIG.6] A view showing a status transition of the radio base station apparatus according to the first embodiment of the present invention.
[FIG.7] A view showing a status transition of the base station control apparatus according to the first embodiment of the present invention.
[FIG.8] An explanatory view showing an outline of a radio communication system according to a second embodiment of the present invention.
[FIG.9] An explanatory view showing an outline of a radio communication system according to a third embodiment of the present invention.
[FIG.10] A view showing a schematic configuration of a radio communication system when VRPP is used.

### Description of Reference Numerals and Signs

- 100R, 100L: base station control apparatus
- 101: cable connecting portion
- 102: communication controlling portion
- 103: terminal connecting radio portion
- 103a: antenna
- 104: cryptography authenticating portion
- 105: inter-AP connecting radio portion
- 105a: antenna
- 200: base station control apparatus
- 201: communication network connecting portion
- 202: base station controlling portion
- 203: base station connecting portion
- 400: radio terminal device
- 500: cable terminal device

### Best Mode for Carrying Out the Invention

### (First Embodiment)

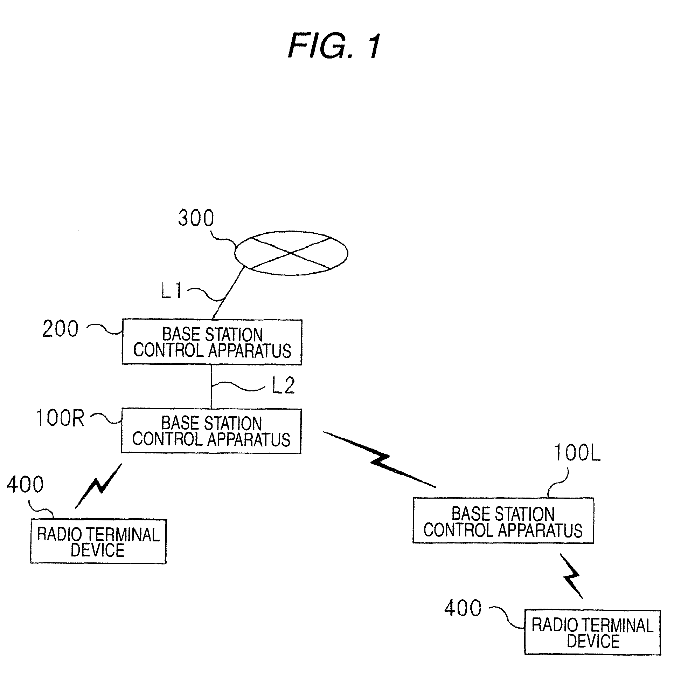

FIG.1 is an explanatory view showing an outline of a radio communication system according to a first embodiment of the present invention. In the present embodiment, as the radio communication system, the case where a wireless LAN stipulated in IEEE802.11, for example, is used as a radio communication system between a base station apparatus and a radio terminal device will be explained hereinafter. However, the present invention is not limited to the wireless LAN, and can be applied to various radio communication systems such as a mobile communication network, and the like.

As shown in FIG.1, the radio communication system according to a first embodiment of the present invention includes a base station control apparatus 200 connected to a communication network 300 by using a communication line L1 such as an optical fiber cable, or the like, a base station control apparatus 100R connected to the base station control apparatus 200 via a communication line L2 such as an Ethernet (registered trademark) type LAN, or the like, for example, and a base station control apparatus 100L connected to the base station control apparatus 100R via radio communication.

The base station control apparatus 200 has a configuration that can be connected to a plurality of radio base station apparatuses via the communication line L2, and controls the connected radio base station apparatuses in cooperation. The base station control apparatuses 100R, 100L get into radio communication with a radio terminal device 400.

Here, the communication system stipulated in IEEE802.11a or IEEE802.11g, for example, is used in the communication between the base station control apparatus 100L and the base station control apparatus 100R, and the communication system stipulated in IEEE802.11b, for example, is used in the communication between the base station control apparatuses 100R, 100L and the radio terminal device 400.

In this manner, the base station control apparatus 100R and the base station control apparatus 100L are connected to communicate with each other via radio. Therefore, the radio base station apparatus can be installed in a radio wave dead zone such as a conference room that is surrounded by walls, or the like, a location such as a separate building in which the cable cannot be physically laid, or the like, and others.

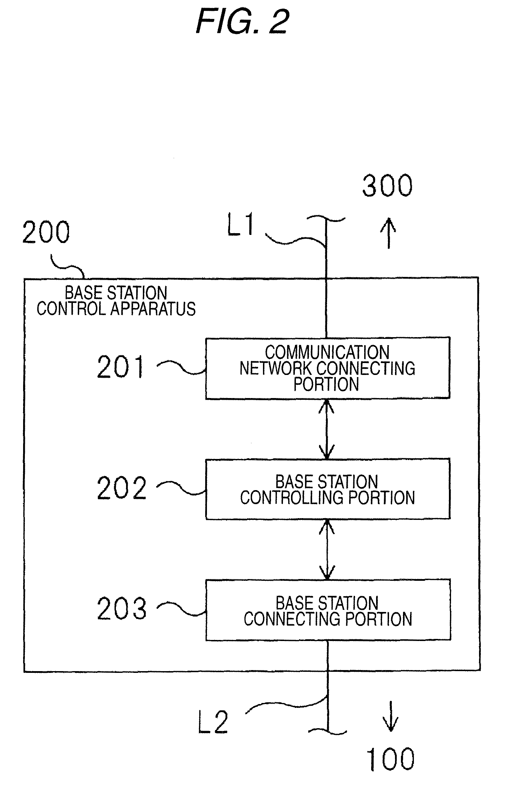

FIG.2 is a block diagram showing a schematic configuration of the base station control apparatus according to the first embodiment of the present invention. As shown in FIG.2, the base station control apparatus 200 includes a communication network connecting portion 201 connected to the communication network 300, a base station controlling portion 202 for controlling the base station control apparatus 100, and a base station connecting portion 203 connected to the base station control apparatus 100.

The communication network connecting portion 201 is connected to the communication network 300. The base station controlling portion 202 controls a configuration of the connected base station control apparatus 100, a status monitoring of the base station control apparatus 100, and the like. The base station connecting portion 203 holds communication with the base station control apparatus 100 by using a radio base station control protocol.

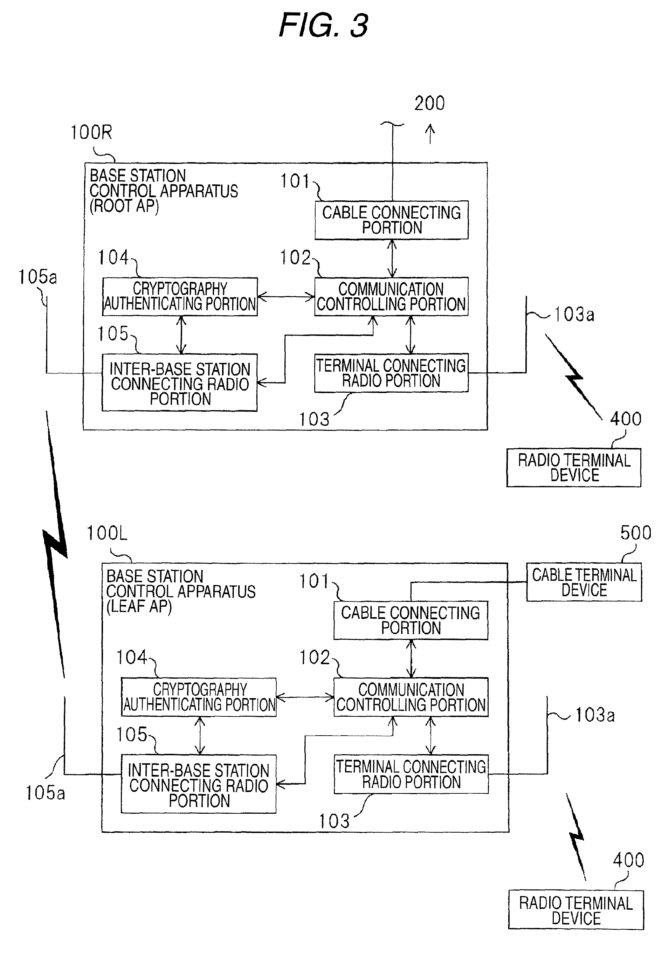

FIG.3 is a block diagram showing a schematic configuration of the radio base station apparatus according to the first embodiment of the present invention. As shown in FIG.3, each of the base station control apparatuses 100R, 100L includes a cable connecting portion 101 connected to the cable communication line, a communication controlling portion 102 for controlling an operation of the radio base station apparatus by the base station control apparatus 200, a terminal connecting radio portion 103 for holding the radio communication with the radio terminal device 400 via an antenna 103a, a cryptography authenticating portion 104 for executing the authentication by encrypting the data in transmitting the data between the base stations and decrypting the data in receiving the data, and an inter-base station connecting radio portion 105 for holding communication with other radio base station apparatuses via an antenna 105a. In the following explanation, the base station control apparatus 100R connected to the base station control apparatus 200 via cable is referred to as a root AP, and the base station control apparatus 100L connected to the base station control apparatus 100R via radio is referred to as a leaf AP.

In the root AP 100R, the cable connecting portion 101 is connected to the cable communication line L2, and performs communication with the base station control apparatus 200 by using the radio base station control protocol. The communication controlling portion 102 executes the control in response to the instruction from the base station control apparatus 200, and also switches communication with the radio terminal device 400 via the terminal connecting radio portion 103 and communication with the leaf AP 100L via the inter-base station connecting radio portion 105 to hold communication with the base station control apparatus 200 via the cable connecting portion 101. In this case, preferably the communication controlling portion 102 should control the communication with the leaf AP 100L prior to the communication with the radio terminal device 400.

In the leaf AP 100L, the inter-base station connecting radio portion 105 holds radio communication with the root AP 100R by the radio base station control protocol. The cryptography authenticating portion 104 handles the encryption and the authentication in the communication with the root AP 100R. Like the root AP 100R, the terminal connecting radio portion 103 holds radio communication with the radio terminal device 400. The cable connecting portion 101 can be connected a cable terminal device 500 via the cable communication line L2 (for example, Ethernet (registered trademark) type LAN, or the like). The communication controlling portion 102 executes the control in response to the instruction from the base station control apparatus 200, and also switches communication with the radio terminal device 400 via the terminal connecting radio portion 103 and communication with the cable terminal device 500 via the cable connecting portion 101 to hold communication with the base station control apparatus 200 via the inter-base station connecting radio portion 105 and the root AP 100R.

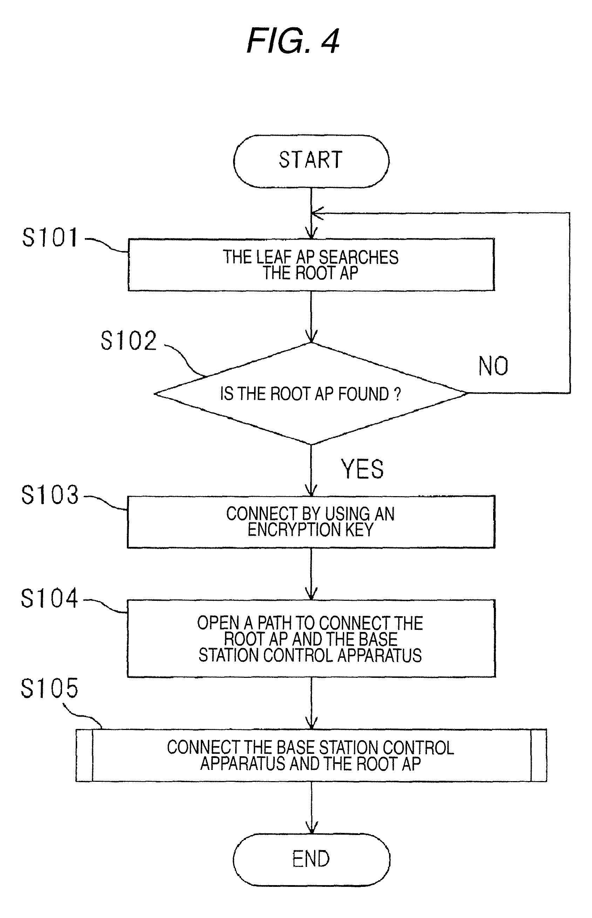

FIG.4 is a flowchart showing procedures of a communication connection method of the radio communication system according to the first embodiment of the present invention. When the leaf AP 100L is installed and a power supply is turned ON, the communication controlling portion 102 scans the presence of the root APs 100R by using a beacon, or the like via the inter-base station connecting radio portion 105 to search the root AP 100R that can be connected via radio (step S101).

When the root AP 100R detects the beacon transmitted from the leaf AP 100L, it makes a response to the beacon. Then, the leaf AP 100L detects a response from the root AP 100R to decide whether or not the root AP 100R is found (step S102).

In this case, if a plurality of root APs 100R are detected by the leaf AP 100L, the nearest root AP 100R may be selected by measuring an electric field strength in the response, an error rate of data, or the like.

If no root AP 100R is found (No in step S102), the leaf AP 100L goes back to step S101 and searches successively the root AP 100R. In contrast, if the root AP 100R is found, a connection is established by using an encryption key being set previously between the leaf AP 100L and the root AP 100R (step S103).

Here, the encryption key used in the connection between the leaf AP 100L and the root AP 100R can be changed after the connection is established. When the encryption key is changed, the base station control apparatus 200 transmits the encryption key data to be changed (referred to as "new encryption key data" hereinafter) to the root AP 100R. When the root AP 100R receives the new encryption key data, it updates the data in the cryptography authenticating portion 104 and also transmits the updated data to the leaf AP 100L. When the leaf AP 100L receives the new encryption key data, it updates the data in the cryptography authenticating portion 104 and holds communication with the root AP 100R by using the new encryption key data. Accordingly, improvement of security can be further achieved. Here, when a plurality of leaf APs 100L are connected, update of the encryption key data may be applied simultaneously to all leaf APs 100L or may be applied individually to respective leaf APs 100L.

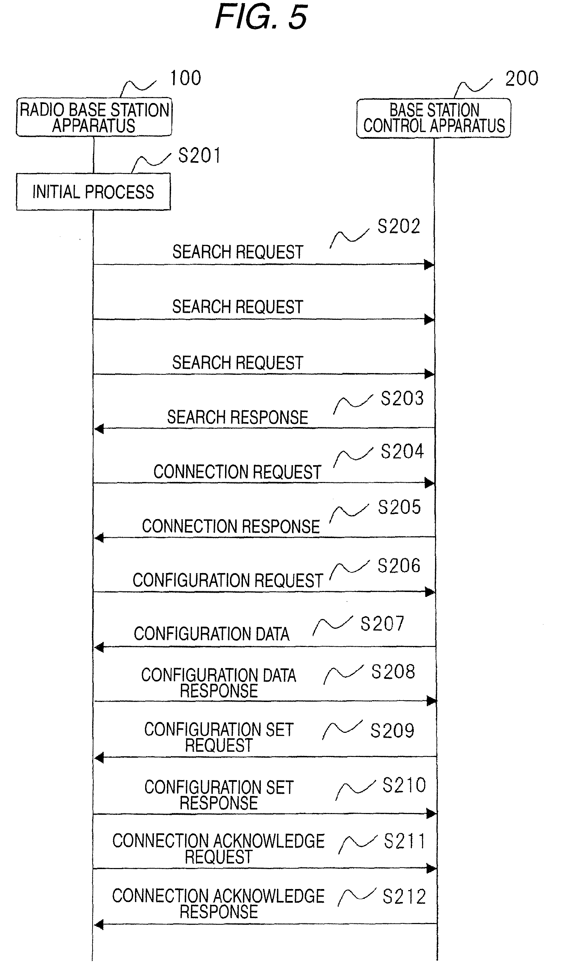

When the root AP 100R established the connection with the leaf AP 100L, it opens a path to connect the leaf AP 100L and the base station control apparatus 200 (step S104). Then, the base station control apparatus 200 and the leaf AP 100L execute a connecting process via the root AP 100R (step S105). In the meantime, the root AP 100R causes the cryptography authenticating portion 104 to execute the cryptography authentication and causes the inter-base station connecting radio portion 105 to execute the connecting process between the base stations via radio, and also causes to pass the data between the base station control apparatus 200 and the leaf AP 100L. As a result, the connection equivalent to the communication that is held directly between the leaf AP 100L and the base station control apparatus 200 can be built up between them. This connecting process will be explained with reference to FIG.5 to FIG.7 hereunder.

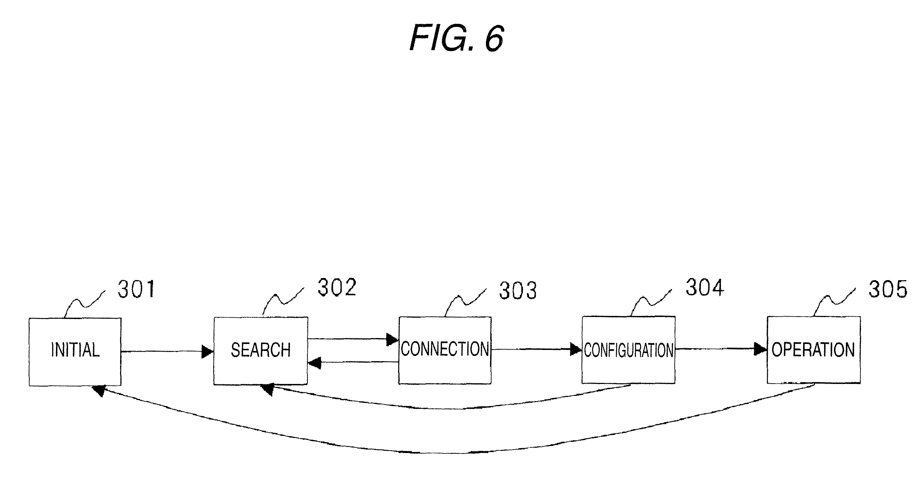

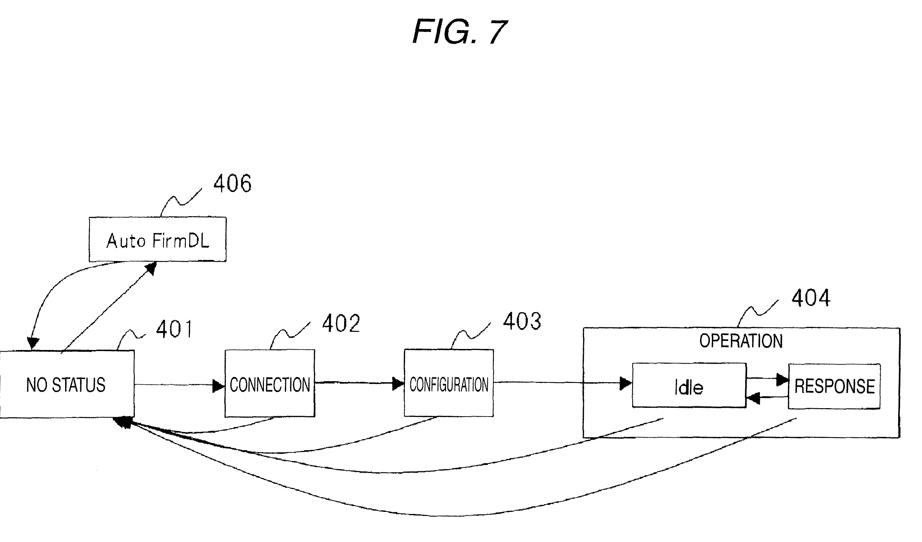

FIG.5 is a sequence diagram showing data exchange between the radio base station apparatus and the base station control apparatus according to the first embodiment of the present invention. FIG.6 is a view showing a status transition of the radio base station apparatus according to the first embodiment of the present invention. Also, FIG.7 is a view showing a status transition of the base station control apparatus according to the first embodiment of the present invention.

The exchange of data between the leaf AP 100L and the base station control apparatus 200 and the status transition between the leaf AP 100L and the base station control apparatus 200 will be explained with reference to FIG.5 to FIG.7 hereunder. The case where the connection should be established between the leaf AP 100L and the base station control apparatus 200 will be explained hereunder. This explanation is similarly true of the case where the connection is established between the root AP 100R and the base station control apparatus 200.

First, the leaf AP 100L in its initial process (step S201) establishes the connection with the root AP 100R, and then transmits a search request message to the base station control apparatus 200 (step S202). At this time, the leaf AP 100L transfers from an initial status 301 to a search status 302. The radio base station apparatus 100 continues to transmit periodically this search request message until it receives a search response message from the base station control apparatus 200.

When the base station control apparatus 200 receives the search request message from the leaf AP 100L, it transmits the search response message to inform the leaf AP 100L of its own existence (step S203).

The leaf AP 100L transmits the search request message to the base station control apparatus 200 at a predetermined time. When the base station control apparatus 200 receives the search request message from the leaf AP 100L, it sends back the search response message to inform the leaf AP 100L of the presence of the base station control apparatus 200.

When the leaf AP 100L receives the search response message from the base station control apparatus 200, it demands a connection of the base station control apparatus 200 by transmitting a connection request message to the base station control apparatus 200 via the root AP 100R to make its own entry (step S204). At this time, the leaf AP 100L shifts from the search status 302 to a connection status 303.

When the base station control apparatus 200 receives the connection request message from the leaf AP 100L, it shifts from a no status 401 to a connection status 402 and registers the information of the entered leaf AP 100L. Then, the base station control apparatus 200 checks a MAC address of the leaf AP 100L to decide whether the connection of the leaf AP 100L should be allowed or not. If the connection should not be allowed, the base station control apparatus 200 interrupts the connection at this point of time and transmits a connection response message of NG to the MAC address of the entered leaf AP 100L. When the leaf AP 100L receives the connection response message of NG, it returns to the search status 302 from the connection status 303 and executes the process over again from the initial process. In contrast, if the connection should be allowed, the base station control apparatus 200 transmits a connection response message to the MAC address of the entered leaf AP 100L (step S205).

When the leaf AP 100L receives the connection response message from the base station control apparatus 200, it shifts from the connection status 303 to a configuration status 304 and then transmits a configuration request message to the base station control apparatus 200 (step S206).

When the base station control apparatus 200 receives the configuration request message from the leaf AP 100L, it shifts from the connection status 402 to a configuration status 403 and informs the leaf AP 100L of a configuration that is adaptable to the leaf AP 100L by a configuration data message (step S207).

The leaf AP 100L receives the configuration data message from the base station control apparatus 200, then sets the configuration in the hardware register by expanding the message, and then transmits a configuration data response message to the base station control apparatus 200 (step S208). Here, processes in steps S207 to S208 are repeated until the transmission of all configuration data to be set (referred to as "configuration data" hereinafter) is finished.

After all configuration data are transmitted from the base station control apparatus 200 and the configuration data response message is returned in response to the final configuration data message, the base station control apparatus 200 transmits a configuration set request message to the leaf AP 100L (step S209). A start of the operation of the leaf AP 100L is triggered by this transmission of the configuration set request message

When the leaf AP 100L receives the configuration set request message from the base station control apparatus 200, the configuration is completed and the leaf AP 100L transmits a configuration set response message to the base station control apparatus 200 and shifts from the configuration status 304 to an operation status 305 to enter into its operation state (step S210). In contrast, in the case of the configuration failure, or the like, the leaf AP 100L returns to the search status 302 from the configuration status 304 and executes the process over again from the initial process. When the base station control apparatus 200 receives the configuration set response message, it shifts from the configuration status 403 to the operation status 404.

Then, the leaf AP 100L transmits a connection acknowledge request message to the base station control apparatus 200 at a predetermined interval of time during the operation to inform the base station control apparatus 200 of a normal operation of the leaf AP 100L (step S211).

The base station control apparatus 200 receives the connection acknowledge request message from the leaf AP 100L, and transmits a connection acknowledge response message to the leaf AP 100L as the response (step S212).

The processes in steps S211 to S212 are repeated during the operation of the leaf AP 100L and the base station control apparatus 200.

In this manner, according to the first embodiment of the present invention, it is possible to establish more radio base station apparatuses that do not need the cable connection to the base station control apparatus, and the radio base station apparatus can be installed simply because the automatic connection and configuration can be made after the installation.

### (Second Embodiment)

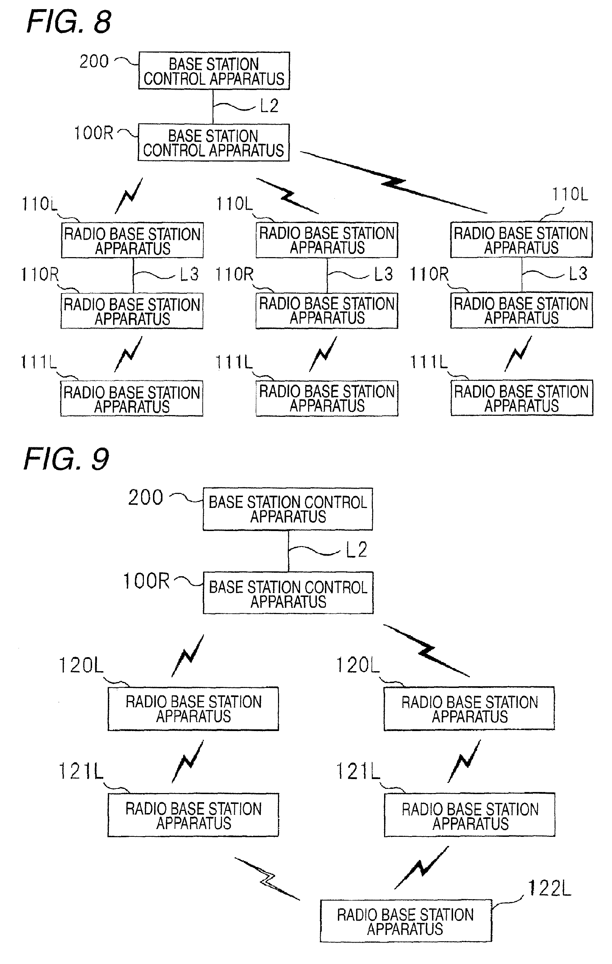

FIG.8 is an explanatory view showing an outline of a radio communication system according to a second embodiment of the present invention. In the present embodiment, the same reference symbols are affixed herein to the redundant portions with those in the first embodiment explained with reference to FIG.1 to FIG.7.

As shown in FIG.8, in the radio communication system according to the present embodiment, at least one radio base station apparatus 110L (referred to as the "leaf AP" hereinafter) is connected to the base station control apparatus (root AP) 100R via radio. Also, a radio base station apparatus 110R (referred to as the "root AP" hereinafter) is connected to the leaf AP 110L via a cable communication line L3. Also, a radio base station apparatus 111 L (referred to as the "leaf AP" hereinafter) is connected to the root AP 110R via a radio line.

The root APs 100R, 110R and the leaf APs 110L, 111 L have the same configurations as those in the radio base station apparatus shown in FIG.3.

The communication line L3 is connected to the cable connecting portion 101 of the leaf AP 110L, and the leaf AP 110L and the root AP 110R can communicate with each other. As the communication line L3, the Ethernet (registered trademark) type LAN, or the like, for example, can be applied. Also, the communication controlling portion 102 of the leaf AP 110L switches the cable connecting portion 101 and the terminal connecting radio portion 103 to establish the communication connection with the root AP 100R via the inter-base station connecting radio portion 105.

As the communication line L3, the Ethernet (registered trademark) type LAN, or the like, for example, can be applied. Also, the leaf AP 110L and the root AP 110R can communicate with each other by connecting the cable connecting portion 101 of the leaf AP 110L and the root AP 110R.

The communication controlling portion 102 of the leaf AP 110L switches the cable connecting portion 101 and the terminal connecting radio portion 103 to establish the communication connection with the root AP 100R via the inter-base station connecting radio portion 105.

Like the root AP 100R, the communication controlling portion 102 of the root AP 110R switches the inter-base station connecting radio portion 105 and the terminal connecting radio portion 103 to establish the communication connection with the base station control apparatus 200 via the cable connecting portion 101, the leaf AP 110L, and the root AP 100R.

The communication controlling portion 102 of the leaf AP 111L switches the cable connecting portion 101 and the terminal connecting radio portion 103 to establish the communication connection with the root AP 110R via the inter-base station connecting radio portion 105.

In this case, if a plurality of apparatuses can be connected to the cable connecting portion 101, the leaf AP 110L may be connected to a plurality of root APs 110R. Also, the leaf AP 110R may hold a radio communication with a plurality of leaf APs 111 L. In addition, like the leaf AP 110L, the leaf AP 111 L may be connected to the radio base station apparatus, which acts as the root AP to hold the radio communication with the radio base station apparatus (lower leaf AP) via radio, via the cable connecting portion 101.

In this manner, according to the second embodiment of the present invention, it is possible to establish more lower radio base station apparatuses to the radio base station apparatus that serves as the leaf AP. Therefore, the radio base station apparatus can be installed more simply.

### (Third Embodiment)

FIG.9 is an explanatory view showing an outline of a radio communication system according to a third embodiment of the present invention. In the present embodiment, the same reference symbols are affixed herein to the redundant portions with those in the first embodiment explained with reference to FIG.1 to FIG.7.

As shown in FIG.9, in the radio communication system of the present embodiment, at least one radio base station apparatus 120L (referred to as the "leaf AP" hereinafter) is connected to the base station control apparatus (root AP) 100R via radio. Also, a radio base station apparatus 121 L (referred to as the "leaf AP" hereinafter) is connected to the radio base station apparatus 120L via radio. Also, a radio base station apparatus 122L (referred to as the "leaf AP" hereinafter) is connected to the leaf AP 121 L via radio.

The leaf APs 120L, 121L, 122L have the same configurations as those in the radio base station apparatus shown in FIG.3. Also, the radio base station apparatuses serving as the leaf APs 120, 121L, 122L can be connected to the base station control apparatus 200 when they are connected to the upper root AP or leaf AP by using the inter-base station connecting radio portion 105. Also, these radio base station apparatuses have the configuration that can be connected to the radio base station apparatus serving as the lower leaf AP by using the inter-base station connecting radio portion 105. Also, when the radio base station apparatus serving as the lower leaf AP is connected, these radio base station apparatuses acts as the root AP that controls the data exchanged between the upper radio base station apparatus and the lower radio base station apparatus.

The inter-base station connecting radio portion 105 of the leaf AP 120L has the same configuration that can communicate with the root AP 100R and the leaf AP 121 L. Also, the communication controlling portion 102 of the leaf AP 120L switches the cable connecting portion 101 and the terminal connecting radio portion 103 to establish the communication connection to the root AP 100R via the inter-base station connecting radio portion 105. Also, when the communication controlling portion 102 of the leaf AP 120L receives the data (downstream data) addressed to the lower leaf AP or the cable or radio terminal device being communicated with the lower leaf AP from the root AP 100R, it transmits the data to the lower leaf AP 121L via the inter-base station connecting radio portion 105. Also, when the communication controlling portion 102 of the leaf AP 120L receives the data (upstream data) addressed to the upper root AP 100R from the lower leaf AP 121L, it transmits the data to the root AP 100R via the inter-base station connecting radio portion 105.

The inter-base station connecting radio portion 105 of the leaf AP 1211 L has the same configuration that can communicate with the leaf AP 120L and the leaf AP 122L. Also, the communication controlling portion 102 of the leaf AP 121L switches the cable connecting portion 101 and the terminal connecting radio portion 103 to establish the communication connection to the leaf AP 120L via the inter-base station connecting radio portion 105. Also, when the communication controlling portion 102 of the leaf AP 121 L receives the data addressed to the lower leaf AP or the cable or radio terminal device being communicated with the lower leaf AP from the leaf AP 120L, it transmits the data to the lower leaf AP 122L via the inter-base station connecting radio portion 105. Also, when the communication controlling portion 102 of the leaf AP 121 L receives the data addressed to the upper root AP 100R from the lower leaf AP 122L, it transmits the data to the leaf AP 120L via the inter-base station connecting radio portion 105.

Here, the method of connecting the radio base station apparatus to the upper radio base station apparatus after the radio base station apparatus serving as the leaf AP is installed is given as explained in the first embodiment. In case the communicatable radio base station apparatus is present in plural in circumference, the connection to the radio base station apparatus that is estimated as the nearest one, for example, is established. Each leaf AP may communicate with a plurality of lower leaf APs via radio.

In this manner, according to the third embodiment of the present invention, it is possible to establish more lower radio base station apparatuses to the radio base station apparatus that serves as the leaf AP. Therefore, the radio base station apparatus can be installed more simply.

In the explanation in the above first to third embodiments, the example in which one base station control apparatus 200 is provided is explained. In this case, the present invention may be similarly embodied by using VRRP (Virtual Router Redundancy Protocol), or the like as a redundancy protocol to realize the redundancy of the base station control apparatus.

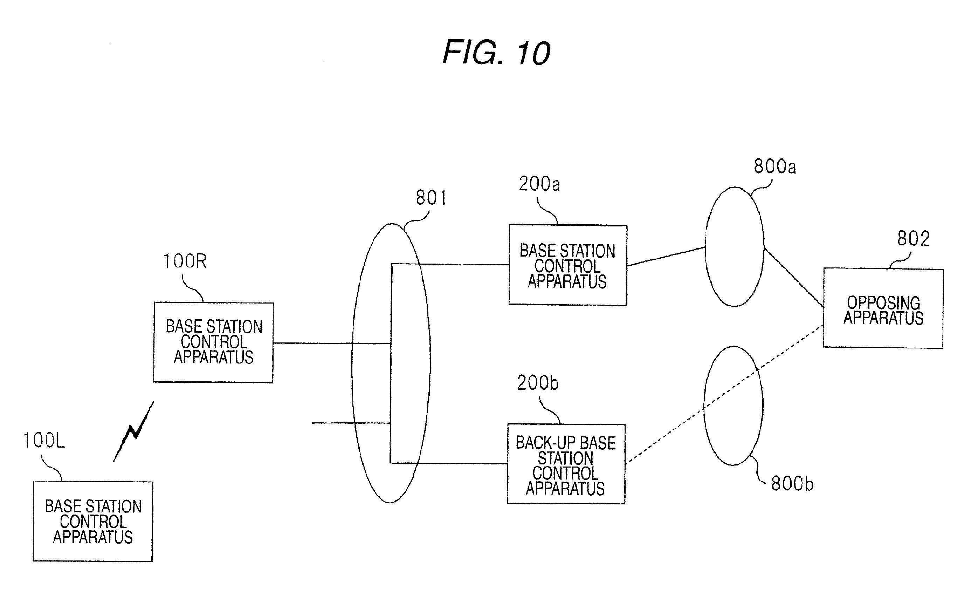

FIG.10 is a view showing a schematic configuration of the radio communication system when VRPP is used. As shown in FIG.10, in this communication system, a back-up base station control apparatus 200b as well as a base station control apparatus 200a is installed, and both control equipments are connected to the base station control apparatus (root AP) 100R via a communication network 801 such as the Ethernet (registered trademark) type LAN, or the like, for example. Also, the base station control apparatus 200a and the back-up base station control apparatus 200b are connected to an opposing apparatus 802 via a different communication line (via upper communication networks 800a, 800b) respectively.

Here, the base station control apparatus 200a and the back-up base station control apparatus 200b have the same configuration as the base station control apparatus 200 explained above. The base station connecting portions 203 of the base station control apparatuses 200a, 200b execute the control using VRRP.

The base station control apparatus 200a and the back-up base station control apparatus 200b monitor whether or not any trouble is caused in the communication respectively, and advertises based on VRRP when some trouble is caused. Thus, the back-up base station control apparatus 200b acts as the master control apparatus instead of the base station control apparatus 200a.

Therefore, the radio base station apparatus 100R is connected to the communication network 800a via the base station control apparatus 200a in the normal operation. When any trouble is caused in the base station control apparatus 200a, between the radio base station apparatus 100R and the base station control apparatus 200a or in the upper communication network 800a of the base station control apparatus 200a, the radio base station apparatus 100R is connected to the communication network 800b via the back-up base station control apparatus 200b. As a result, when any trouble is caused, the communication is held via the different communication path to make sure the redundancy of the base station control apparatus and therefore the radio base station system with high certainty of communication can be provided.

The present invention is explained in detail with reference to the particular embodiments. But it is apparent for those skilled in the art that various variations and modifications can be applied without departing from a spirit and a scope of the present invention.

This application is based upon Japanese Patent Application (Patent Application 2005-174179) filed June 14, 2005; the entire contents of which are incorporated herein by reference.

### Industrial Applicability

The radio base station apparatus of the present invention possesses such an advantage that such apparatus can be installed simply, and is useful to a radio system such as a wireless LAN, or the like.

## Claims

1. A radio base station apparatus for a radio communication system including a base station control apparatus and the radio base station apparatus which holds communication with a radio terminal device via radio communication and is connectable to an upper communication network via the base station control apparatus, the radio base station apparatus comprising:
an inter-base station connecting radio portion that holds communication with a first radio base station apparatus which is connected to the base station control apparatus;
a terminal connecting radio portion that holds radio communication with the radio terminal device; and
a communication controlling portion that holds communication from the terminal connecting radio portion to the radio terminal device and controls the inter-base station connecting radio portion,
wherein the communication controlling portion searches the first radio base station apparatus, executes a connecting process to the first radio base station apparatus, acquires configuration information from the base station control apparatus via the first radio base station apparatus, and holds communication with the base station control apparatus via the first radio base station apparatus by using the inter-base station connecting radio portion.

2. The radio base station apparatus according to claim 1, further comprising:
a cable connecting portion that connects a cable communication line for holding communication with a second radio base station apparatus serving as a lower radio base station apparatus,
wherein the communication controlling portion controls the cable connecting portion and the inter-base station connecting radio portion to interconnect the communication between the first radio base station apparatus and the second radio base station apparatus.

3. The radio base station apparatus according to claim 1, wherein the inter-base station connecting radio portion holds communication with a third radio base station apparatus serving as a lower radio base station apparatus, and
wherein the communication controlling portion controls the inter-base station connecting radio portion to interconnect the communication between the first radio base station apparatus and the second radio base station apparatus.

4. A radio base station system which holds communication with a terminal device via radio communication and is connectable to an upper communication network, the radio base station system comprising:
the radio base station apparatus set forth in claim 1;
a first base station controlling device which connects the radio base station apparatus and the communication network by using a first communication path; and
a second base station controlling device which connects the radio base station apparatus and the communication network by using a second communication path different from the first communication path,
wherein a redundancy is applied to the first base station controlling device and the second base station controlling device by using a VRRP protocol.
